# EUROPÄISCHE PATENTANMELDUNG

(11) **EP 1 840 245 A1**
(43) Veröffentlichungstag der Anmeldung: **03.10.2007**
(21) Anmeldenummer: 06006326.0
(22) Anmeldetag: 27.03.2006
(51) Int. Cl.: C23C 26/00, C23C 30/00, C04B 35/00

(54) **Matrix und Schichtsystem mit unstöchiometrischen Teilchen**

(71) Anmelder: SIEMENS AKTIENGESELLSCHAFT, 80333 München (DE)
(72) Erfinder: Stamm, Werner, Dr., 45481 Mülheim an der Ruhr (DE); Steinbach, Jan, Dr., 13353 Berlin (DE)

(57) **Zusammenfassung**

Schutzschichten nach dem Stand der Technik erreichen ihre Schutzfunktion dadurch, dass sie an einem bestimmten Element verarmen, das eine schützende Oxidschicht bildet oder als Opfermaterial verbraucht wird. Wenn dieses Material verbraucht ist, kann die Schutzfunktion nicht mehr aufrechterhalten werden.

Erfindungsgemäß werden Teilchen (1) verwendet, die ein Depot an dem sich verbrauchenden Material enthalten, das verzögert abgegeben wird. Dies wird dadurch erreicht, dass dieses Material überstöchiometrisch vorhanden ist.

## Beschreibung

Die Erfindung betrifft eine Matrix gemäß Anspruch 1 und ein Schichtsystem gemäß Anspruch 22.

Bauteile für Hochtemperaturanwendungen, beispielsweise Turbinenschaufeln und Brennkammerwände von Gasturbinen, weisen Schutzschichten gegen Oxidation und Korrosion auf. Solche Schichten bestehen beispielsweise aus einer Legierung des Typs MCrAlX, wobei sich auf dieser MCrAlX-Schicht eine schützende Aluminiumoxid-Schicht bildet. Dabei diffundiert das Aluminium der MCrAlX-Legierung an die Oberfläche der MCrAlX-Schicht, sodass die MCrAlX-Legierung an dem Element Aluminium verarmt.
Ein vorbeugend überhöhter Anteil an Aluminium in der MCrAlX-Legierung von Anfang an, um der Verarmung entgegenzuwirken, führt aber zu schlechteren mechanischen Eigenschaften der MCrA1X-Schicht.

Außerdem sind Kompressorschaufeln bekannt, die mit Schutzschichten gegen Korrosion und Erosion versehen sind.
Diese weisen bei der Herstellung einen anorganischen Binder mit einem Metall auf, wobei das Metall als galvanisches Opferelement dient und daher elektrisch leitend mit dem Substrat des Bauteils verbunden ist. Eine geeignete Zusammensetzung einer solchen Schutzschicht ist aus der EP 0 142 418 B1 bekannt.
Auch hier besteht das Problem darin, dass sich das Metall mit der Zeit verbraucht, sodass die Schutzfunktion nicht mehr erfüllt wird.

Ummantelte Pulverteilchen, die aus Al bestehen, sind aus der US 6,635,362 bekannt.

Die EP 0 933 448 B1 offenbart Oxidteilchen in einer Schicht bestehend aus einem Aluminid.

Die WO 2002/066706 A2 zeigt eine Matrix mit ummantelten Teilchen, die aus stöchiometrischen Legierungen bestehen.

Es ist daher Aufgabe der Erfindung, eine Matrix und ein Schichtsystem aufzuzeigen, die eine längere Schutzwirkung aufweisen.

Die Aufgabe wird gelöst durch eine Matrix gemäß Anspruch 1 und ein Schichtsystem gemäß Anspruch 22.

In den jeweiligen Unteransprüchen sind weitere vorteilhafte Maßnahmen aufgelistet, die beliebig miteinander in vorteilhafter Art und Weise miteinander kombiniert werden können.

Es zeigen
- Figur 1, 2, 3: erfindungsgemäße Schichten bzw. ein Substrat,
- Figur 4: eine Gasturbine,
- Figur 5: perspektivisch eine Turbinenschaufel,
- Figur 6: perspektivisch eine Brennkammer.

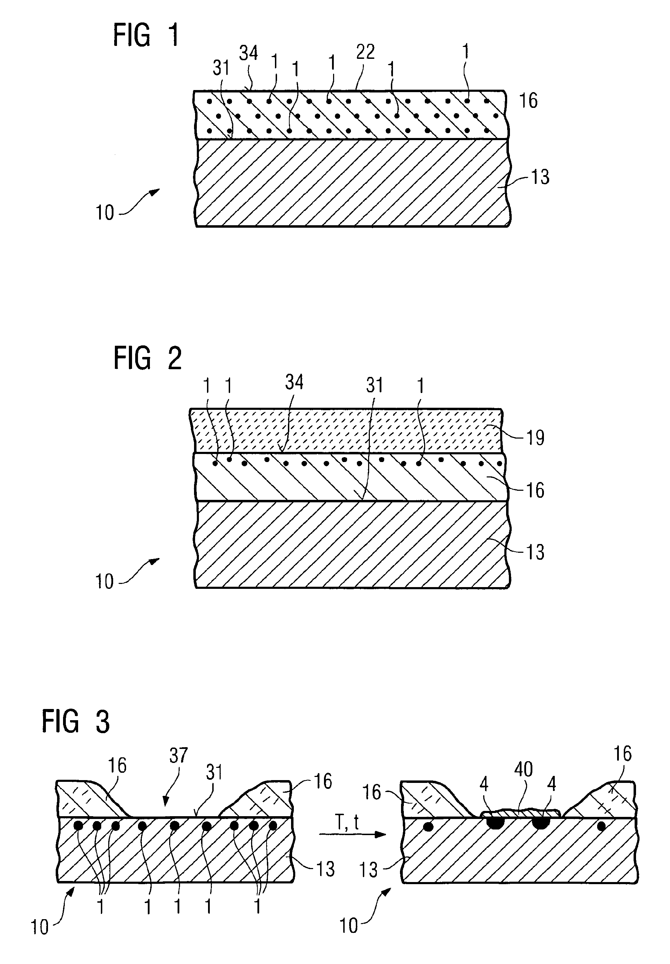

Eine Verbindung besteht aus zumindest zwei oder aus mehreren chemischen Elementen und weist eine bestimmte Stöchiometrie auf. Eine Legierung (metallische Verbindung) besteht aus zumindest zwei metallischen Elementen.
Das Teilchen 1 (Fig. 1, 2, 3) besteht aus einer Verbindung, die zumindest ein Metall Me einer Matrix einer Schicht 16 (Fig. 1, 2) oder eines Substrats 13 (Fig. 3) in einem unstöchiometrischen Verhältnis aufweist. Das zumindest eine weitere chemische Element Z, das mit dem Metall Me die Verbindung bildet, kann ein Bestandteil des Matrixmaterials sein oder ein chemisches Element darstellen, das in dem Matrixmaterial nicht enthalten ist.
Die Verbindung, also das Material des Teilchens 1, ist insbesondere eine Verbindung des Metalls Me mit einem Nichtmetall, stellt also eine Keramik (Nichtoxid- oder Oxidkeramik, ein Oxynitrid, Nitrid, Borid oder Karbid) dar und ist vorzugsweise ein Oxid, vorzugsweise Aluminiumoxid und/oder Chromoxid. Das Teilchen 1 weist auch vorzugsweise ein Nitrid auf. Vorzugsweise besteht das Teilchen 1 aus einem Metalloxid und/oder Metallnitrid.

Das Teilchen 1 kann auch mehrere Arten von Verbindungen aufweisen: Oxide, Oxynitride, Nitride, Boride oder Karbide.

Vorzugsweise wird eine überstöchiometrische Verbindung MeₐZ_{b-y} (y>0), Meₐ₊ₓZ_{b} (x>0) oder Meₐ₊ₓZ_{b-y} (x>0, y>0) genutzt anstatt MeₐZ_{b}, also beispielsweise (Z = Stickstoff N) AlN_{l-y} (y>0), Al₁₊ₓ N (x>o) oder Alₗ₊ₓN_{l-y} (x>0,Y>0) anstatt AlN.

Ebenso kann die Verbindung für das Teilchen 1 aus einer Legierung bestehen, die eine unstöchiometrische Zusammensetzung der Legierung darstellt.
So wird beispielsweise anstatt von NiAl eine Legierung Ni_{1-y}Al (y>0) oder NiAl₁₊ₓ (x>0) verwendet.

Auch unterstöchiometrische Verbindungen können von Vorteil sein.

Vorzugsweise weist das Teilchen 1 nur ein Metallelement Me auf.
Vorzugsweise weist das Teilchen 1 zwei Metallelemente Me auf. Das Metallelement Me in der Verbindung, in der Legierung oder in den Siliziumketten ist insbesondere Aluminium (A1).
Ebenso kann das Metallelement Chrom (Cr) sein.
Weiterhin kann eine Chrom-Aluminium-Legierung (Al-Cr) verwendet werden, um eine Verbindung für das Teilchen 1 herzustellen.

Ebenso kann ein organisches Material R-Me-C-R wie beispielsweise ein Si-Me-O-C Material (Siliziumketten) für das Teilchen 1 verwendet werden (Me = A1) C = Kohlenstoff, R = Kohlenstoffkette.
Das R-Me-C-R Material ist insbesondere aus einem Polysiloxan-Harz hergestellt. Polysiloxan-Harze sind polymer-keramische Vorstufen der Strukturformel R-SiO_{1,5} mit zumindest einem Metallelement, wobei R = -CH3, -CH, -CH₂, -C₆Hₛ etc. sein kann. Das Material wird thermisch vernetzt, wobei anorganische Bestandteile (Si-O-Si-Ketten) und organische Seitenketten überwiegend aus R nebeneinander vorliegen. Anschließend werden die Vorstufen über eine Temperaturbehandlung in Ar, N₂, Luft- oder Vakuum-Atmosphäre bei Temperaturen zwischen 600°C und 1200°C keramisiert. Dabei wird das polymere Netzwerk zersetzt und über thermische Zwischenstufen von amorphen bis kristalline Phasen neu strukturiert, wobei ausgehend von Polysiloxan-Vorstufen ein Si-Al(=Me)-O-C-Netzwerk entsteht. Ebenso können auch von Vorstufen des Typs Polysilan (Si-Si), Polycarbosilan (Si-C), Polysilazan (Si-N) oder Polybarosilazan (Si-B-C-N) mit Metallelementen Me verwendet werden.
Hier muss das Metallelement Me nicht im unstöchiometrischen Verhältnis vorhanden sein. Es genügt die Fähigkeit der Verbindung, dass das Metallelement Me sich leicht aus der Verbindung lösen kann.

Das Teilchen 1 kann ein gesintertes Pulverteilchen oder ein Pulverkorn sein.
Der Durchmesser des Teilchens 1 kann im Mikro, Submikro (<1µm) - oder Nanobereich (≤ 500nm) liegen. Als Durchmesser kann auch die größte Querlänge eines Polyeders verstanden werden.

Die Teilchen 1 weisen vorzugsweise keine Ummantelung aus einem anderen Material auf.

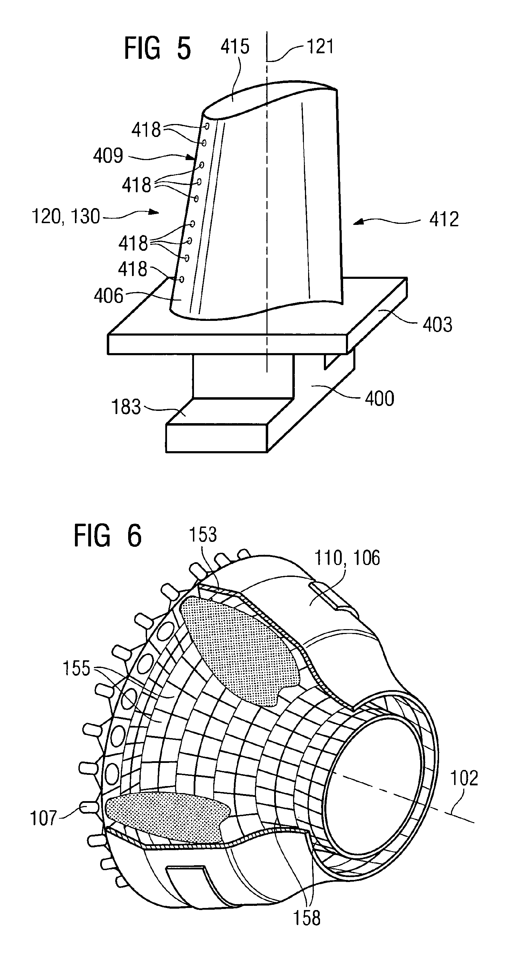

Figur 1 zeigt eine erfindungsgemäße Matrix einer Schicht 16. Die Schicht 16 ist ein Teil eines Bauteils 10 oder Schichtsystems 10, das aus einem Substrat 13 besteht, auf dem die Schicht 16 angeordnet ist.
Das Substrat 13 ist beispielsweise ein Bauteil für hohe Temperaturen, wie zum Beispiel bei Dampf- oder Gasturbinen 100 (Fig. 5), bestehend aus einer nickel-, kobalt- oder eisenbasierten Superlegierung.

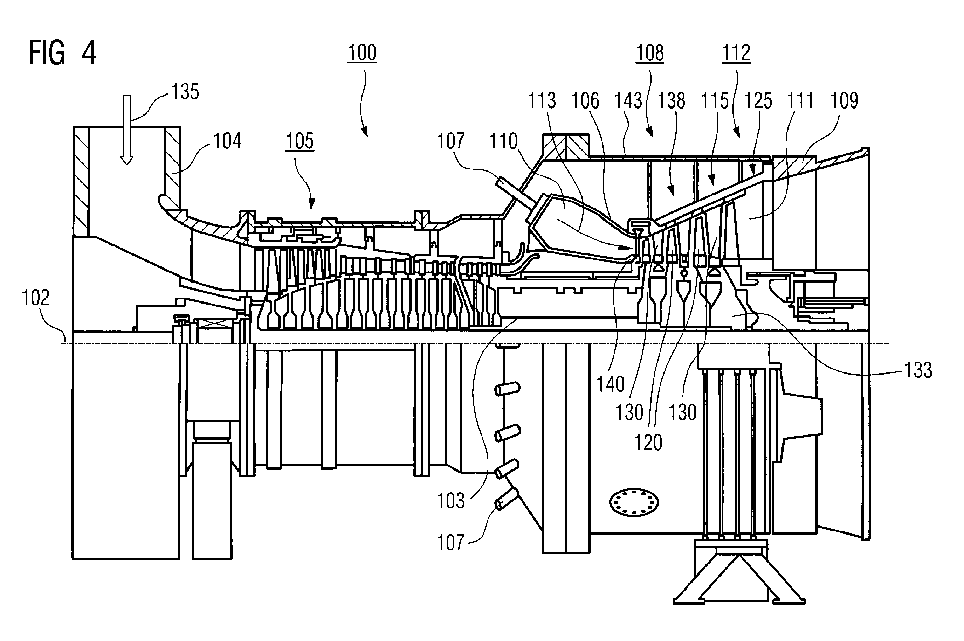

Anwendung finden solche Schichtsysteme 10 bei Turbinenschaufeln 120, 130 (Fig. 4, 5), Hitzeschildelementen 155 (Fig. 6) oder Gehäuseteilen 138 (Fig. 4).
Die Schicht 16 weist eine Matrix aus einem Matrixmaterial auf, in der die Teilchen 1 homogen oder lokal unterschiedlich (beispielsweise mit einem Gradienten verteilt sind. Das Teilchen 1 stellt also eine Sekundärphase in der Matrix (Schicht, Substrat) dar.
Dabei kann ein örtlicher Konzentrationsgradient der Teilchen 1 innerhalb der Schicht 16 oder auch des Substrats 13 vorhanden sein. So nimmt beispielsweise die Konzentration der Teilchen 1 ausgehend von der Oberfläche 31 des Substrats 13 in Richtung einer Oberfläche 34 der Schicht 16 zu.
Dabei können auch mehrere Schichten 16, 19 hergestellt und verwendet werden, wobei die Teilchen 1 in einer oder mehreren Schichten vorhanden sind.

Die Matrix der Schicht 16 ist vorzugsweise metallbasiert. Beispielsweise ist die Schicht 16 eine Legierung des Typs MCrA1X und die Teilchen 1 bestehen aus einer Aluminiumverbindung. Die Teilchen 1 können in der ganzen Schicht 16 verteilt oder lokal konzentriert nahe der äußeren Oberfläche 22 der Schicht 16 (Fig. 2) angeordnet sein.

Die Wirkungsweise der verlängerten Schutzwirkung wird exemplarisch anhand einer MCrA1X-Schicht beschrieben.
Wie schon weiter oben beschrieben, ergibt sich die Schutzfunktion der MCrAlX-Legierung dadurch, dass das Aluminium Aluminiumoxid bildet, wobei allerdings dadurch das Aluminium in dem Matrixmaterial verarmt.
Bei hohen Temperaturen diffundiert das Aluminium langsam aus den Teilchen 1 in die Matrix der Schicht 16 und füllt so in dem Matrixmaterial das durch die Oxidation verbrauchte Aluminium wieder auf, sodass sich die ursprüngliche Zusammensetzung der MCrAlX-Legierung kaum oder gar nicht verändert, bis sich kein Aluminium mehr in dem Teilchen 1 befindet.
Damit wird erreicht, dass sich die Lebensdauer der Schutzschicht 16 erheblich verlängert.

Die Teilchen 1 lösen sich in der Matrix auf zwei verschiedene Arten diffusiv auf. Entweder sie werden von den Atomen des Matrixmaterials durchdrungen, bei den nickelbasierten Werkstoffen sind dies die Atome der Gamma-Phase, oder es diffundiert der nicht-metallische keramikbildende Bindungspartner in das Teilchen einwärts und das metallische Element löst sich in der Matrix auf.

Bei nickelbasierten Werkstoffen löst sich das metallische Element, vorzugsweise Aluminium, in der Gamma-Phase auf. Im letzteren Fall würde ein stöchiometrischer Kern der entsprechenden keramischen Zusammensetzung verbleiben und durch Teilchenhärtung dauerhaft verfestigend für die γ'-Phase wirken.

Ebenso können diese Teilchen 1 zur Verstärkung einer Superlegierung verwendet werden. Die Größe der Teilchen 1 entspricht vorzugsweise der optimalen Größe der γ'-Phase einer Superlegierung.
Die nicht aufgeschmolzenen Teilchen 1 sind dann vorzugsweise bereits in der Schmelze vorhanden und werden mit abgegossen. Bezüglich der Anordnungsweise und Wirkungsweise einer Sekundärphase in einer Superlegierung wird auf den Stand der Technik verwiesen. Die Teilchen 1 haben dann folgende Funktionen: Verbesserung der mechanischen Eigenschaften und Erzielung einer Notlaufeigenschaft.

Die Stöchiometrie kann auch so gewählt sein, dass sich der überstöchiometrische Anteil durch Diffusion in der Kristallstruktur des Matrixmaterials der Schicht 16 langsam auflöst und gegebenenfalls Ausscheidungen in dem Matrixmaterial bildet und so erst nach einer gewissen Zeit eine Diffusion des Materials des Teilchens 1 direkt in die Matrix ermöglicht, da bis zu diesem Zeitpunkt die Schutzfunktion beispielsweise der MCrA1X-Schicht noch gegeben ist.

Unabhängig davon, ob die Teilchen 1 auch in einer Schicht 16 angeordnet sind, die auf dem Substrat 13 vorhanden sind, ergibt sich bei dem Vorhandensein der Teilchen 1 in dem Substrat 13 eine weitere Schutzfunktion:
Während des Einsatzes des Schichtsystems 10, kann es passieren, dass die Schicht 16 (MCrAlX oder MCrAlX + äußere Keramikschicht) in einem Bereich 37 abplatzt, so dass ein Teil einer Oberfläche 31 des Substrats 13 ungeschützt ist (Fig. 3). Jedoch sind im oberflächennahen Bereich die Teilchen 1 vorzugsweise in hoher Konzentration (Fig. 2) angeordnet. Durch den weiteren Einsatz des Schichtsystems 10 bei hohen Temperaturen T für längere Zeit t korrodiert die Oberfläche 31 des Substrats 13 im Bereich 37, wodurch die der Teilchen 1 freigesetzt wird. Durch eine Reaktion des Materials des Teilchens 1 ergibt sich eine Schutzfunktion in dem Bereich 37 des Substrats 13. Im Falle von Superlegierungen, die für Gasturbinenschaufeln verwendet werden, weist das Teilchen 1 Aluminium auf, so dass sich eine Schutzschicht 40 aus Aluminiumoxid bildet, die durch Oxidation des Aluminiums des Teilchens 1 entstanden ist.

Die Teilchen 1 können entweder nur in der Schicht 16 (MCrAlX) oder nur in dem Substrat 13 vorhanden sein. Ebenso ist es möglich, dass die Teilchen sowohl in einer Schicht 16 als auch im Substrat 13 angeordnet sind.

Ebenso kann die Schicht 16 eine Schutzschicht gegen Korrosion und/oder Erosion einer Kompressorschaufel darstellen, wobei die Teilchen 1 in einer Schicht 16 vorzugsweise mit der chemischen Zusammensetzung gemäß des Patents EP 0 142 418 B1 dazu führen, dass über einen deutlich längeren Zeitraum genügend Opfermaterial zur Verfügung gestellt wird, damit sich die gewünschte Schutzfunktion ergibt.
Dabei wird eine aluminiumhaltige Verbindung für das Teilchen verwendet.

Beim Verdichten von Luft im Verdichter kann Wasser ausfallen, das unter Umständen in Verbindung mit anderen in der Luft enthaltenen Elementen einen Elektrolyten bildet, welches zu Korrosion und Erosion an den Verdichterschaufeln führen kann.

Um die Korrosion und/oder Erosion zu verhindern, werden Verdichterschaufeln daher in der Regel mit Beschichtungen versehen. Hierbei kommen insbesondere Beschichtungen 16 in Betracht, die eine beispielsweise phosphatgebundene Grundmatrix mit darin dispersiv verteilten Metallpartikeln wie etwa Aluminiumpartikel umfassen. Die Schutzwirkung einer derartigen Beschichtung besteht darin, dass die in der Grundbeschichtung eingebetteten Metallpartikel zusammen mit dem (edleren) Metall der Verdichterschaufel und dem Elektrolyten eine galvanische Zelle bilden, in welcher die Metallpartikel sog. Opfer-Anoden bilden. Die Oxidation bzw. die Korrosion findet dann in den Opfer-Anoden statt, d.h. in den Metallpartikeln und nicht im Metall der Verdichterschaufel.

Die phosphatgebundene Grundmatrix der Beschichtung hat glaskeramische Eigenschaften, ist thermisch stabil, ebenfalls korrosionsbeständig und schützt gegen mechanische Einwirkungen, etwa Abrasion und Erosion.

Neben den Metallpartikeln kann die Beschichtung weitere Partikel als Füllstoffe enthalten. Beispielhaft seien an dieser Stelle Farbstoffpartikel genannt.

Neben phosphatgebundenen Beschichtungen kommen weitere Arten von Beschichtungen 16 in Betracht. Die EP 0 142 418 B1, die EP 0 905 279 A1 und die EP 0 995 816 A1 beschreiben Beschichtungen auf Chromat/Phosphat-Basis. Die EP 1 096 040 A2 beschreibt eine Beschichtung 16 auf Phosphat/Borat-Basis und die EP 0 933 446 B1 beschreibt eine Beschichtung auf Phosphat/Permanganat-Basis.
Auch diese Schichten können eine erfindungsgemäße Matrix aufweisen.

Die Teilchen 1 können mit fast jedem Beschichtungsverfahren zusammen aufgebracht werden, also mittels thermischen Plasmaspritzens (APS, VPS, LPPS), Kaltgasspritzens, HVOF oder eines elektrolytischen Beschichtungsverfahrens.

Figur 2 zeigt ein weiteres Anwendungsbeispiel der erfindungsgemäßen Schicht 16.
Das Schichtsystem 10 besteht aus einem Substrat 13, einer erfindungsgemäßen Schicht 16 mit einer weiteren Schicht 19 auf der Matrix der Schicht 16.
Dies ist beispielsweise ein Schichtsystem 10 für Hochtemperaturanwendungen, wobei das Substrat 13 wieder eine Superlegierung wie oben beschrieben darstellt und die Schicht 16 eine Matrix des Typs MCrAlX aufweist. Dann stellt die Schicht 19 eine keramische Wärmedämmschicht dar, wobei sich zwischen der Schicht 16 und der Schicht 19 die schützende Aluminiumoxid-Schicht (TGO) bildet. Die erfindungsgemäßen Teilchen 1 sind beispielsweise nahe der Grenzfläche zwischen den Schichten 16 und 19 konzentriert.

Ebenso kann man sich ein Bauteil aus einem Material vorstellen, das die Teilchen 1 aufweist, d.h. sie sind nicht in einer Beschichtung vorhanden, sondern in einem massiven Material.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Matrix mit Teilchen (1)
für ein Bauteil (10, 120, 130, 138, 155) oder für eine Schicht (16),
die ein Matrixmaterial aufweist,
das zumindest ein Metallelement (Me) aufweist,
**dadurch gekennzeichnet,**
**dass** das Teilchen (1) eine Verbindung aus dem Metallelement (Me) des Matrixmaterials und zumindest einem weiteren chemischen Element (Z),
vorzugsweise einem Nichtmetall,
insbesondere Stickstoff, Sauerstoff, Kohlenstoff, Bor oder Mischungen daraus,
umfasst und
**dass** das Metallelement (Me) in der Verbindung einen unstöchiometrischen Anteil aufweist,
insbesondere besteht das Teilchen (1) aus dieser Verbindung.

2. Matrix nach Anspruch 1,
**dadurch gekennzeichnet, dass**
das zumindest eine Metallelement (Me) in der Verbindung einen überstöchiometrischen Anteil aufweist.

3. Matrix nach Anspruch 1 oder 2,
**dadurch gekennzeichnet, dass**
das Teilchen (1) nur ein Metallelement (Me) aufweist.

4. Matrix nach Anspruch 1 oder 2,
**dadurch gekennzeichnet, dass**
das Teilchen (1) nur zwei Metallelemente (Me) aufweist.

5. Matrix nach Anspruch 1, 2, 3 oder 4,
**dadurch gekennzeichnet, dass**
das Metallelement (Me) Aluminium (Al) ist.

6. Matrix nach Anspruch 1, 2, 3 oder 4,
**dadurch gekennzeichnet, dass**
das Metallelement (Me) Chrom (Cr) ist.

7. Matrix nach Anspruch 1, 2 oder 4,
**dadurch gekennzeichnet, dass**
das Teilchen (1) Aluminium (Al) und Chrom (Cr) aufweist.

8. Matrix nach Anspruch 1, 2, 3, 4, 5, 6 oder 7,
**dadurch gekennzeichnet, dass**
das Teilchen (1) ein Oxid (Me-O) aufweist.

9. Matrix nach Anspruch 1, 2, 3, 4, 5, 6 oder 7,
**dadurch gekennzeichnet, dass**
das Teilchen (1) ein Nitrid (Me-N) aufweist.

10. Matrix nach einem oder mehreren der vorherigen Ansprüche,
**dadurch gekennzeichnet, dass**
das Teilchen (1) ein Borid (Me-B) aufweist.

11. Matrix nach einem oder mehreren der vorherigen Ansprüche,
**dadurch gekennzeichnet, dass**
das Teilchen (1) ein Karbid (Me-C) aufweist.

12. Matrix nach Anspruch 9,
**dadurch gekennzeichnet, dass**
das Teilchen (1) Aluminiumnitrid (Al-N) aufweist.

13. Matrix nach Anspruch 1, 8 oder 9,
**dadurch gekennzeichnet, dass**
das Teilchen (1) Aluminiumoxynitrid (Al-N-O) aufweist.

14. Matrix nach einem oder mehreren der vorherigen Ansprüche 1 bis 8,
**dadurch gekennzeichnet, dass**
das Teilchen (1) Aluminiumoxid und/oder Chromoxid aufweist.

15. Matrix nach einem oder mehreren der vorherigen Ansprüche,
**dadurch gekennzeichnet, dass**
die Verbindung des Teilchens (1) eine metallorganische Verbindung (R-C-Me-R) aufweist,
insbesondere eine Si-O-C-Me-Verbindung.

16. Matrix nach einem oder mehreren der vorherigen Ansprüche,
**dadurch gekennzeichnet, dass**
das Teilchen (1) kornartig ausgebildet ist.

17. Matrix nach Anspruch 1 oder 16,
**dadurch gekennzeichnet, dass**
der Durchmesser des Teilchens (1) ≤ 1µm,
insbesondere ≤ 500nm ist.

18. Matrix nach einem oder mehreren der vorherigen Ansprüche,
**dadurch gekennzeichnet, dass**
das weitere Element (Z) kein Bestandteil des Matrixmaterial ist.

19. Matrix nach einem oder mehreren der Ansprüche 1 bis 17,
**dadurch gekennzeichnet, dass**
das weitere Element (Z) ein Bestandteil des Matrixmaterial ist.

20. Matrix nach einem oder mehreren der vorherigen Ansprüche,
**dadurch gekennzeichnet, dass**
die Verbindung eine Legierung aufweist.

21. Matrix nach einem oder mehreren der vorherigen Ansprüche,
**dadurch gekennzeichnet, dass**
das Teilchen (1) keine Ummantelung aus einem anderen Material aufweist.

22. Schichtsystem,
das ein Substrat (13) und/oder
zumindest eine Schicht (16, 19),
die auf dem Substrat (13) angeordnet ist,
eine Matrix gemäß einem oder mehreren der Ansprüche 1 bis 21 aufweist.

23. Schichtsystem nach Anspruch 22,
**dadurch gekennzeichnet, dass**
auf der Schicht (16) eine weitere Schicht (19) angeordnet ist.

24. Schichtsystem nach Anspruch 22 oder 23,
**dadurch gekennzeichnet, dass**
die Schicht (16) metallisch ist.

25. Schichtsystem nach Anspruch 23 oder 24,
**dadurch gekennzeichnet, dass**
die Schicht (16) eine Legierung des Typs MCrAlX ist.

26. Schichtsystem nach Anspruch 22 oder 23,
**dadurch gekennzeichnet,**
**dass** die Schicht (16) keramisch oder glaskeramisch ist und dass das Substrat (13) metallisch ist.

27. Schichtsystem nach Anspruch 22, 23, 24, 25 oder 26,
**dadurch gekennzeichnet, dass**
innerhalb der Schicht (16) und/oder des Substrats (13) ein Gradient in der Konzentration der Teilchen (1) besteht.

28. Schichtsystem nach Anspruch 22, 23, 24, 25, 26 oder 27,
**dadurch gekennzeichnet, dass**
nur das Substrat (13) eine Matrix gemäß einem oder mehreren der Ansprüche 1 bis 21 aufweist.

29. Schichtsystem nach Anspruch 22, 23, 24, 25, 26 oder 27,
**dadurch gekennzeichnet, dass**
nur die Schicht (16) eine Matrix gemäß einem oder mehreren der Ansprüche 1 bis 21 aufweist.

30. Schichtsystem nach Anspruch 22, 26, 27 oder 28,
**dadurch gekennzeichnet, dass**
das Substrat (13) nickelbasiert ist.

31. Schichtsystem nach Anspruch 22, 23, 24, 25, 27 oder 29,
**dadurch gekennzeichnet, dass**
die Schicht (16) nickelbasiert ist.

32. Schichtsystem nach einem oder mehreren der vorherigen Ansprüche,
**dadurch gekennzeichnet, dass**
das Substrat (13) eine kobalt-, nickel- oder eisenbasierte Superlegierung ist,
auf der eine Schicht (16) insbesondere mit einer Matrix aus MCrAlX aufgebracht ist,
auf der insbesondere eine keramische Wärmedämmschicht, insbesondere bestehend aus dem Material Zirkonoxid, vorhanden ist.

33. Schichtsystem nach Anspruch 22 oder 32,
**dadurch gekennzeichnet, dass**
das Schichtsystem (10) für ein Bauteil,
insbesondere für eine Turbinenschaufel (120, 130), ein Hitzeschildelement (155) oder ein Gehäuseteil (138) einer Turbine,
insbesondere einer Gas- (100) oder Dampfturbine verwendet wird.

34. Schichtsystem nach Anspruch 22 oder 32,
**dadurch gekennzeichnet, dass**
das Schichtsystem (10) für eine Kompressorschaufel, insbesondere einer Gasturbine (100), verwendet wird.
